# EUROPEAN PATENT SPECIFICATION

(11) **EP 3 499 736 B1**
(45) Date of publication and mention of the grant of the patent: **16.09.2020**
(21) Application number: 17842671.4
(22) Date of filing: 19.06.2017
(51) Int. Cl.: H04B 7/04, H04B 7/06, H04B 7/0456, H04L 5/00

(54) **DATA TRANSMISSION METHOD, AND DATA RECEPTION METHOD, DEVICE AND SYSTEM**
DATENÜBERTRAGUNGSVERFAHREN UND DATENEMPFANGSVERFAHREN, VORRICHTUNG UND SYSTEM
PROCÉDÉ DE TRANSMISSION DE DONNÉES, ET PROCÉDÉ, DISPOSITIF, ET SYSTÈME DE RÉCEPTION DE DONNÉES

(30) Priority: 23.08.2016 CN 201610710376
(43) Date of publication of application: 19.06.2019
(73) Proprietor: Huawei Technologies Co., Ltd., Longgang District Shenzhen, Guangdong 518129 (CN)
(72) Inventor: WU, Ye, Shenzhen Guangdong 518129 (CN); BI, Xiaoyan, Shenzhen Guangdong 518129 (CN)
(74) Representative: Körber, Martin Hans
(86) International application number: PCT/CN2017/089024
(87) International publication number: WO 2018/036246

(56) References cited:
- WO-A1-2008/115508
- WO-A1-2016/041196
- CN-A- 102 412 885
- CN-A- 104 079 384
- US-A1- 2006 098 760
- US-A1- 2008 137 762
- US-A1- 2012 275 530
- CATT: "Discussion on DMRS-based open-loop MIMO", 3GPP DRAFT; R1-164224, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096526, Retrieved from the Internet: URL:http://www.3gpp.org/ftp/tsg_ran/WG1_RL 1/TSGR1_85/Docs/ [retrieved on 2016-05-14]
- ALCATEL -LUCENT SHANGHAI BELL ET AL.: 'Considerations on CSI Feedback Enhancements for High-priority Antenna Configurations' 3GPP TSG-RAN WG1 #66 RL-112420 26 August 2011, XP050537814

## Description

### TECHNICAL FIELD

This application relates to the field of communications technologies, and in particular, to a data sending method, a data receiving method, a device, and a system.

### BACKGROUND

A multiple-input multiple-output (English: Multiple-Input Multiple-Output, MIMO for short) technology is used in a Long Term Evolution (English: Long Term Evolution, LTE for short) or Long Term Evolution Advanced (English: Long term evolution advanced, LTE-A for short) system. In the MIMO technology, a plurality of antennas are deployed on a transmit end device and a receive end device, to improve performance of the LTE or LTE-A system. For example, the transmit end device may be a base station, and the receive end device may be user equipment (English: User equipment, UE for short). The base station may perform scheduling for data transmission of a plurality of UEs.

In a related technology, a plurality of UEs scheduled at a time need to use a same transmission scheme for data transmission. For example, the plurality of UEs scheduled at a time use a closed-loop spatial multiplexing (English: Closed-loop spatial multiplexing, CLSM for short) transmission scheme for data transmission.

In a process of implementing this application, the prior art has at least the following problem: A plurality of UEs scheduled at a time need to use a same transmission scheme for data transmission, and consequently scheduling flexibility is relatively low. Related technology in relation to the precoding of a plurality of spatial flows is disclosed in US2006/098760A1, WO2016/041196A1, US2012/275530A1, WO2008/115508A1 and CATT: "discussion on DMRS-based open-loop MIMO "3GPP draft, R1-164224, RAN WG1, May 16, 2016.

### SUMMARY

To resolve a problem of relatively low scheduling flexibility, embodiments of the present invention provide a data sending method, a data receiving method, a transmit end device, and a receive end device. The present invention is defined by the data sending method of independent claim 1, the data receiving method of independent claim 5, the transmit end device of independent claim 9 and the receive end device of independent claim 13. Additional features of the invention are presented in the dependent claims. In the following, parts of the description and drawings referring to embodiments, which are not covered by the claims, are not presented as embodiments of the invention but as examples useful for understanding the invention. The technical solutions are as follows:

A data transmission system includes a transmit end device and a receive end device, and a communication connection is established between the transmit end device and the receive end device. The transmit end device may be a base station or UE, and the receive end device may also be a base station or UE. When the transmit end device is a base station, the receive end device is UE. When the transmit end device is UE, the receive end device is a base station. In the embodiments of the present invention, an example in which the transmit end device is a base station and the receive end device is UE is used for description.

According to a first aspect, a data sending method is provided, where the data sending method is performed by a transmit end device, and the method includes:
precoding a plurality of spatial flows to obtain a plurality of precoded data streams, where the plurality of spatial flows include at least two first preprocessed spatial flows, and the at least two first preprocessed spatial flows are obtained by preprocessing a first original spatial flow; and
transmitting the plurality of precoded data streams.

According to the data sending method provided in this embodiment of the present invention, because the at least two first preprocessed spatial flows in the plurality of spatial flows are obtained by preprocessing the first original spatial flow, and another spatial flow may be unpreprocessed, a problem of relatively low scheduling flexibility is resolved, and scheduling flexibility is improved.

Optionally, the at least two first preprocessed spatial flows are directed to a first receive end device.

Optionally, the plurality of spatial flows further include at least one original spatial flow.

Optionally, at least one of the at least one original spatial flow is directed to a second receive end device.

Optionally, the plurality of spatial flows further include at least two second preprocessed spatial flows, the at least two second preprocessed spatial flows are obtained by preprocessing a second original spatial flow, and the second original spatial flow is directed to a third receive end device.

According to the data sending method provided in this embodiment of the present invention, because different spatial flows are directed to different receive end devices, and different spatial flows may be corresponding to different transmission schemes, a plurality of receive end devices can use different transmission schemes for data transmission. In this way, a problem of relatively low scheduling flexibility is resolved, and scheduling flexibility is improved.

Optionally, the preprocessing is transmit diversity processing.

Optionally, the transmit diversity processing is space-time transmit diversity processing, space-frequency transmit diversity processing, or space-time-frequency transmit diversity processing.

Optionally, the transmit diversity processing is cyclic delay diversity processing.

Optionally, the preprocessing is transmit diversity-based spatial multiplexing processing.

According to the data sending method provided in this embodiment of the present invention, because preprocessing includes different transmit diversity processing or transmit diversity-based spatial multiplexing processing, and each type of transmit diversity processing or transmit diversity-based spatial multiplexing processing may also be corresponding to one transmission scheme, a plurality of receive end devices can use different transmission schemes for data transmission. In this way, a problem of relatively low scheduling flexibility is resolved, and scheduling flexibility is improved.

Optionally, different spatial flows in the plurality of spatial flows are corresponding to different precoding vectors, each precoding vector is corresponding to one demodulation reference signal DMRS port, different precoding vectors are corresponding to different DMRS ports, and the method further includes:
precoding demodulation reference signals of the plurality of spatial flows to obtain a plurality of precoded demodulation reference signals, where each of the plurality of spatial flows is corresponding to one demodulation reference signal; and
transmitting the plurality of precoded demodulation reference signals.

According to the data sending method provided in this embodiment of the present invention, the demodulation reference signals of the plurality of spatial flows are precoded to obtain the plurality of precoded demodulation reference signals, and the plurality of precoded demodulation reference signals are transmitted, so that a receive end device can restore an original spatial flow.

According to a second aspect, a data receiving method is provided, where the data receiving method is performed by a receive end device, and the method includes:
receiving a plurality of precoded data streams, where the plurality of precoded data streams are obtained by precoding a plurality of spatial flows, the plurality of spatial flows include at least two first preprocessed spatial flows, and the at least two first preprocessed spatial flows are obtained by preprocessing a first original spatial flow;
restoring the at least two first preprocessed spatial flows from the plurality of precoded data streams; and
restoring the first original spatial flow based on the at least two first preprocessed spatial flows.

According to the data receiving method provided in this embodiment of the present invention, because the at least two first preprocessed spatial flows in the plurality of spatial flows are obtained by preprocessing the first original spatial flow, and another spatial flow may be unpreprocessed, a problem of relatively low scheduling flexibility is resolved, and scheduling flexibility is improved.

Optionally, the at least two first preprocessed spatial flows are directed to a first receive end device.

According to the data receiving method provided in this embodiment of the present invention, because the at least two first preprocessed spatial flows are directed to the first receive end device, and another spatial flow may be directed to a receive end device other than the first receive end device, different spatial flows are directed to different receive end devices. Because different spatial flows may also be corresponding to different transmission schemes, a plurality of receive end devices can use different transmission schemes for data transmission. In this way, a problem of relatively low scheduling flexibility is resolved, and scheduling flexibility is improved.

Optionally, the preprocessing is transmit diversity processing.

Optionally, the transmit diversity processing is space-time transmit diversity processing, space-frequency transmit diversity processing, or space-time-frequency transmit diversity processing.

Optionally, the transmit diversity processing is cyclic delay diversity processing.

Optionally, the preprocessing is transmit diversity-based spatial multiplexing processing.

According to the data receiving method provided in this embodiment of the present invention, because preprocessing includes different transmit diversity processing or transmit diversity-based spatial multiplexing processing, and each type of transmit diversity processing or transmit diversity-based spatial multiplexing processing may also be corresponding to one transmission scheme, a plurality of receive end devices can use different transmission schemes for data transmission. In this way, a problem of relatively low scheduling flexibility is resolved, and scheduling flexibility is improved.

Optionally, different spatial flows in the plurality of spatial flows are corresponding to different precoding vectors, each precoding vector is corresponding to one demodulation reference signal DMRS port, different precoding vectors are corresponding to different DMRS ports, and the method further includes:
receiving a plurality of precoded demodulation reference signals, where the plurality of precoded demodulation reference signals are obtained by precoding demodulation reference signals of the plurality of spatial flows, and each of the plurality of spatial flows is corresponding to one demodulation reference signal.

The restoring the at least two first preprocessed spatial flows from the plurality of precoded data streams includes:
restoring the at least two first preprocessed spatial flows from the plurality of precoded data streams based on precoded demodulation reference signals of the at least two first preprocessed spatial flows.

According to the data receiving method provided in this embodiment of the present invention, the plurality of precoded demodulation reference signals are received, so that the receive end device can restore the first original spatial flow.

According to a third aspect, a transmit end device is provided, where the transmit end device includes a processor, a network interface, a memory, and a bus, the memory and the network interface are separately connected to the processor by using the bus, the processor is configured to execute an instruction stored in the memory, and the processor implements the data sending method according to any one of the first aspect and the optional manners of the first aspect by executing the instruction.

According to a fourth aspect, a receive end device is provided, where the receive end device includes a processor, a network interface, a memory, and a bus, the memory and the network interface are separately connected to the processor by using the bus, the processor is configured to execute an instruction stored in the memory, and the processor implements the data receiving method according to any one of the second aspect and the optional manners of the second aspect by executing the instruction.

According to a fifth aspect, a transmit end device is provided, where the transmit end device includes at least one module, and the at least one module is configured to implement the data sending method according to any one of the first aspect and the optional manners of the first aspect.

According to a sixth aspect, a receive end device is provided, where the receive end device includes at least one module, and the at least one module is configured to implement the data receiving method according to any one of the second aspect and the optional manners of the second aspect.

According to a seventh aspect, a data transmission system is provided, where the data transmission system includes:
the transmit end device according to the third aspect or the fifth aspect; and
the receive end device according to the fourth aspect or the sixth aspect.

The technical solutions provided in the embodiments of the present invention bring the following beneficial effects:
The transmit end device precodes the plurality of spatial flows to obtain the plurality of precoded data streams, and transmits the plurality of precoded data streams, where the plurality of spatial flows include the at least two first preprocessed spatial flows, and the at least two first preprocessed spatial flows are obtained by preprocessing the first original spatial flow; and the receive end device restores the at least two first preprocessed spatial flows from the plurality of precoded data streams, and then restores the first original spatial flow based on the at least two first preprocessed spatial flows. Because the at least two first preprocessed spatial flows in the plurality of spatial flows are obtained by preprocessing the first original spatial flow, another spatial flow may be unpreprocessed, and different spatial flows may be corresponding to different transmission schemes, a problem of relatively low scheduling flexibility is resolved, and scheduling flexibility is improved.

### BRIEF DESCRIPTION OF DRAWINGS

FIG. 1 is a schematic diagram of an implementation environment according to an embodiment of the present invention;
FIG. 2 is a schematic structural diagram of a network device in the implementation environment shown in FIG. 1;
FIG. 3 is a schematic diagram of an application program unit in the network device shown in FIG. 2;
FIG. 4 is a schematic diagram of another application program unit in the network device shown in FIG. 2;
FIG. 5 is a flowchart of a data transmission method according to an embodiment of the present invention;
FIG. 6 is a flowchart of another data transmission method according to an embodiment of the present invention;
FIG. 7 is a schematic diagram of a data transmission method according to an embodiment of the present invention;
FIG. 8 is a block diagram of a transmit end device according to an embodiment of the present invention;
FIG. 9 is a block diagram of a receive end device according to an embodiment of the present invention; and
FIG. 10 is a schematic structural diagram of a data transmission system according to an embodiment of the present invention.

### DESCRIPTION OF EMBODIMENTS

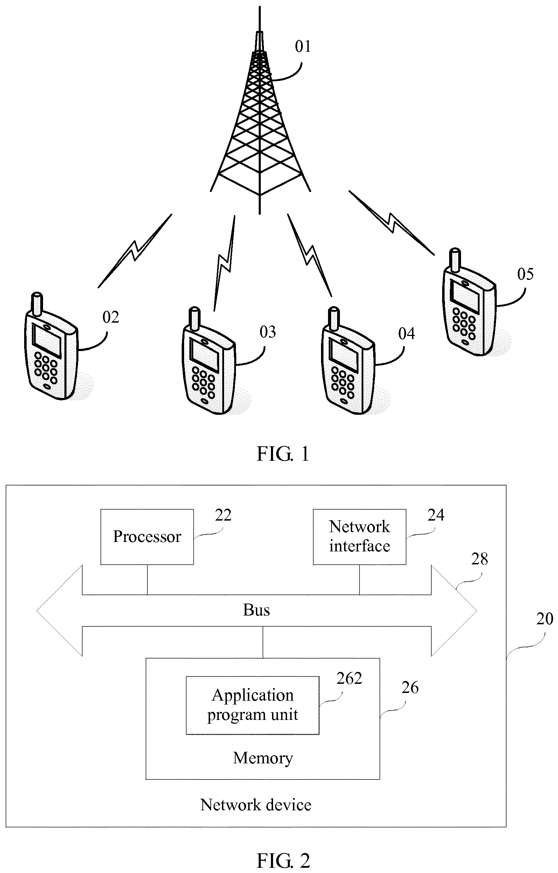

FIG. 1 is a schematic diagram of an implementation environment according to an embodiment of the present invention. The implementation environment provides a data transmission system. The data transmission system may be a wireless communications system, and may be specifically a MIMO system. Referring to FIG. 1, the implementation environment may include a base station 01 and a plurality of UEs. In an example, as shown in FIG. 1, an example in which the plurality of UEs include UE-02, UE-03, UE-04, and UE-05 is used for description in this implementation environment.

In this implementation environment, the base station 01 and each of the plurality of UEs may be a transmit end device, or may be a receive end device. For example, when the base station 01 is a transmit end device, the plurality of UEs are receive end devices, or when any one of the plurality of UEs is a transmit end device, the base station 01 is a receive end device. An example in which the base station 01 is a transmit end device and all of the plurality of UEs are receive end devices is used for description in this implementation environment and the following embodiments.

In this embodiment of the present invention, the transmit end device may precode a plurality of spatial flows to obtain a plurality of precoded data streams, and transmit the plurality of precoded data streams, where the plurality of spatial flows include at least two first preprocessed spatial flows, and the at least two first preprocessed spatial flows are obtained by preprocessing a first original spatial flow; and the receive end device may restore the at least two first preprocessed spatial flows from the plurality of precoded data streams, and then restore the first original spatial flow based on the at least two first preprocessed spatial flows. The transmit end device obtains the at least two first preprocessed spatial flows by preprocessing the first original spatial flow, so that scheduling flexibility can be improved.

FIG. 2 is a schematic structural diagram of a network device 20 according to an embodiment of the present invention. The network device 20 may be a transmit end device or a receive end device, the transmit end device may be the base station 01 or any UE (for example, the UE-02) in the implementation environment shown in FIG. 1, and the receive end device may be any UE (for example, the UE-02) or the base station 01 in the implementation environment shown in FIG. 1. Specifically, when the transmit end device is the base station 01, the receive end device is UE; or when the transmit end device is UE, the receive end device is the base station 01. Referring to FIG. 2, the network device 20 includes a processor 22 and a network interface 24.

The processor 22 includes one or more processing cores. The processor 22 executes various function applications and processes data by running a software program and a unit.

There may be a plurality of network interfaces 24, and the network interface 24 is used by the network device 20 to communicate with another storage device or network device.

Optionally, the network device 20 further includes components such as a memory 26 and a bus 28. The memory 26 and the network interface 24 are separately connected to the processor 22 by using the bus 28.

The memory 26 may be configured to store a software program and a unit. Specifically, the memory 26 may store an operating system (not shown in FIG. 2) and an application program unit 262 that is required by at least one function, and the operating system may be an operating system such as Real-Time Executive (English: Real-Time Executive, RTX for short), Linux, Unix, Windows, or OS X.

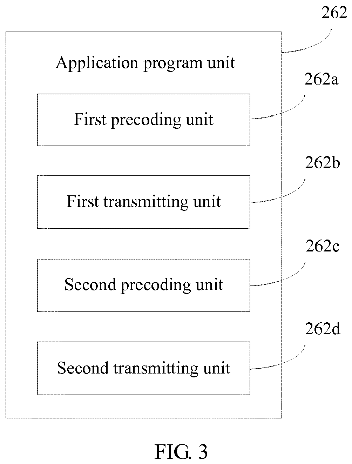

FIG. 3 is a schematic structural diagram of an application program unit 262 according to the embodiment shown in FIG. 2. Referring to FIG. 3, when the network device 20 is a transmit end device and the transmit end device is the base station 01 or UE, the application program unit 262 may include a first precoding unit 262a, a first transmitting unit 262b, a second precoding unit 262c, and a second transmitting unit 262d.

The first precoding unit 262a precodes a plurality of spatial flows to obtain a plurality of precoded data streams, where the plurality of spatial flows include at least two first preprocessed spatial flows, and the at least two first preprocessed spatial flows are obtained by preprocessing a first original spatial flow.

The first transmitting unit 262b transmits the plurality of precoded data streams.

Different spatial flows in the plurality of spatial flows are corresponding to different precoding vectors, each precoding vector is corresponding to one demodulation reference signal DMRS port, and different precoding vectors are corresponding to different DMRS ports.

The second precoding unit 262c precodes demodulation reference signals of the plurality of spatial flows to obtain a plurality of precoded demodulation reference signals, where each of the plurality of spatial flows is corresponding to one demodulation reference signal.

The second transmitting unit 262d transmits the plurality of precoded demodulation reference signals.

Optionally, the at least two first preprocessed spatial flows are directed to a first receive end device.

Optionally, the plurality of spatial flows further include at least one original spatial flow.

Optionally, at least one of the at least one original spatial flow is directed to a second receive end device.

Optionally, the plurality of spatial flows further include at least two second preprocessed spatial flows, the at least two second preprocessed spatial flows are obtained by preprocessing a second original spatial flow, and the second original spatial flow is directed to a third receive end device.

Optionally, the preprocessing is transmit diversity processing.

Optionally, the transmit diversity processing is space-time transmit diversity processing, space-frequency transmit diversity processing, or space-time-frequency transmit diversity processing.

Optionally, the transmit diversity processing is cyclic delay diversity processing.

Optionally, the preprocessing is transmit diversity-based spatial multiplexing processing.

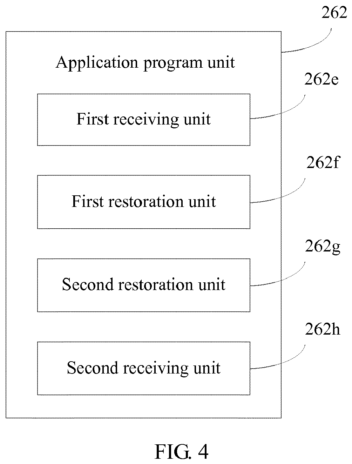

FIG. 4 is a schematic structural diagram of another application program unit 262 according to the embodiment shown in FIG. 2. Referring to FIG. 4, when the network device 20 is a receive end device and the receive end device is the UE-02 or the base station 01, the application program unit 262 may include a first receiving unit 262e, a first restoration unit 262f, a second restoration unit 262g, and a second receiving unit 262h.

The first receiving unit 262e receives a plurality of precoded data streams, where the plurality of precoded data streams are obtained by precoding a plurality of spatial flows, the plurality of spatial flows include at least two first preprocessed spatial flows, and the at least two first preprocessed spatial flows are obtained by preprocessing a first original spatial flow.

The first restoration unit 262f restores the at least two first preprocessed spatial flows from the plurality of precoded data streams.

The second restoration unit 262g restores the first original spatial flow based on the at least two first preprocessed spatial flows.

Different spatial flows in the plurality of spatial flows are corresponding to different precoding vectors, each precoding vector is corresponding to one demodulation reference signal DMRS port, and different precoding vectors are corresponding to different DMRS ports.

The second receiving unit 262h receives a plurality of precoded demodulation reference signals, where the plurality of precoded demodulation reference signals are obtained by precoding demodulation reference signals of the plurality of spatial flows, and each of the plurality of spatial flows is corresponding to one demodulation reference signal.

The first restoration unit 262f restores the at least two first preprocessed spatial flows from the plurality of precoded data streams based on precoded demodulation reference signals of the at least two first preprocessed spatial flows.

Optionally, the at least two first preprocessed spatial flows are directed to a first receive end device.

For the preprocessing, refer to the embodiment shown in FIG. 3, and details are not described herein again in this embodiment.

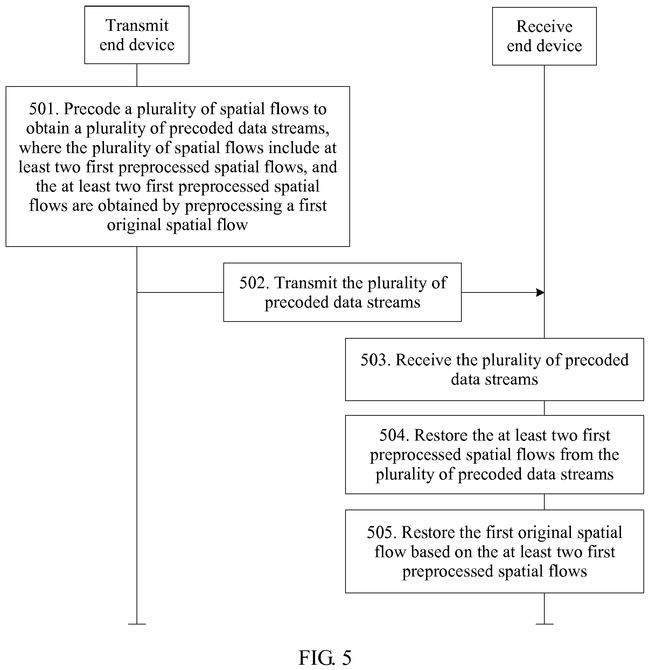

FIG. 5 is a flowchart of a data transmission method according to an embodiment of the present invention. An example in which the data transmission method is applied to the implementation environment shown in FIG. 1 is used for description in this embodiment. Referring to FIG. 5, the data transmission method may include the following steps.

Step 501: A transmit end device precodes a plurality of spatial flows to obtain a plurality of precoded data streams, where the plurality of spatial flows include at least two first preprocessed spatial flows, and the at least two first preprocessed spatial flows are obtained by preprocessing a first original spatial flow.

The plurality of spatial flows may further include at least one original spatial flow and/or at least two second preprocessed spatial flows, and the like. The at least two first preprocessed spatial flows may be directed to a first receive end device, at least one of the at least one original spatial flow may be directed to a second receive end device, and a second original spatial flow may be directed to a third receive end device. The at least two second preprocessed spatial flows are obtained by preprocessing the second original spatial flow. In this embodiment of the present invention, the preprocessing may be transmit diversity processing or transmit diversity-based spatial multiplexing processing. The transmit diversity processing may be space-time transmit diversity processing, space-frequency transmit diversity processing, or space-time-frequency transmit diversity processing, or the transmit diversity processing may be cyclic delay diversity processing. The transmit diversity-based spatial multiplexing processing may be large-delay cyclic delay diversity processing.

It should be noted that the preprocessing in this application is merely an example. In an actual application, there are various types of preprocessing, and the preprocessing is not limited in this embodiment of the present invention. Step 501 may be implemented by the first precoding unit 262a in the embodiment shown in FIG. 3.

Step 502: The transmit end device transmits the plurality of precoded data streams to a receive end device.

After obtaining the plurality of precoded data streams, the transmit end device may transmit the plurality of precoded data streams to the receive end device. Step 502 may be implemented by the first transmitting unit 262b in the embodiment shown in FIG. 3. For a specific implementation process, refer to a related technology, and details are not described herein in this embodiment of the present invention.

It should be noted that in this embodiment of the present invention, different spatial flows in the plurality of spatial flows may be corresponding to different precoding vectors, each precoding vector may be corresponding to one demodulation reference signal (English: Demodulation reference signal, DMRS for short) port, different precoding vectors are corresponding to different DMRS ports, and each of the plurality of spatial flows is corresponding to one demodulation reference signal. The transmit end device may further precode demodulation reference signals of the plurality of spatial flows to obtain a plurality of precoded demodulation reference signals, and then transmit the plurality of precoded demodulation reference signals to the receive end device.

Step 503: The receive end device receives the plurality of precoded data streams transmitted by the transmit end device.

When the transmit end device transmits the precoded data streams to the receive end device, the receive end device may receive the precoded data streams transmitted by the transmit end device. Step 503 may be implemented by the first receiving unit 262e in the embodiment shown in FIG. 4. For a specific implementation process, refer to a related technology, and details are not described herein in this embodiment of the present invention.

Step 504: The receive end device restores the at least two first preprocessed spatial flows from the plurality of precoded data streams.

Optionally, the receive end device may restore the at least two first preprocessed spatial flows from the plurality of precoded data streams based on precoded demodulation reference signals of the at least two first preprocessed spatial flows. In this embodiment of the present invention, each precoding vector may be corresponding to one DMRS port, and different precoding vectors are corresponding to different DMRS ports. A quantity of DMRSs is usually equal to a quantity of spatial flows, and the DMRSs may be used for channel demodulation, because a precoding vector used to precode each spatial flow is the same as a precoding vector used to precode a DMRS corresponding to the spatial flow, but the DMRS does not need to be preprocessed. In other words, an original spatial flow is preprocessed to obtain at least two spatial flows, these spatial flows are associated with respective DMRSs, and these DMRSs are different from each other. The receive end device may demodulate a received precoded data stream based on a precoded demodulation reference signal corresponding to a DMRS port, to obtain a spatial flow. Specifically, the receive end device may estimate a precoding vector by using the precoded demodulation reference signal, so as to restore at least two first preprocessed spatial flows based on the precoding vector.

Step 504 may be implemented by the first restoration unit 262f in the embodiment shown in FIG. 4. For a specific implementation process, refer to a related technology, and details are not described herein in this embodiment of the present invention.

It should be noted that the plurality of precoded data streams sent by the transmit end device may include a precoded data stream directed to another receive end device. In this case, for a current receive end device, the precoded data stream directed to the another receive end device should be considered as interference, and such interference may be canceled by using various existing interference cancellation technologies or receiver technologies. Actually, in a multi-user MIMO (English: Multi-user MIMO, MU-MIMO for short) scenario, in an ideal environment (for example, the transmit end device knows complete channel information of each receive end device), a precoding matrix corresponding to another receive end device is designed to be orthogonal to a channel of the current receive end device. In this case, a precoded data stream to be transmitted to the another receive end device has been eliminated before arriving at the current receive end device. However, in an actual application, the transmit end device cannot learn the complete channel information of the receive end device, but can learn only rough channel information of the receive end device. In this case, the precoding matrix corresponding to the another receive end device cannot be totally orthogonal to the channel of the current receive end device. Therefore, when arriving at the current receive end device, the precoded data streams to be transmitted to the current receive end device still include a residual of the precoded data stream to be transmitted to the another receive end device.

Step 505: The receive end device restores the first original spatial flow based on the at least two first preprocessed spatial flows.

The receive end device may restore the first original spatial flow from the at least two first preprocessed spatial flows by using a preprocessing method used by the transmit end device to preprocess the first original spatial flow to generate the at least two first preprocessed spatial flows. The receive end device may learn the preprocessing method by using various methods, for example, a manner (a fixed manner) specified in a standard, or a manner (a flexible manner) indicated by the transmit end device. For example, the transmit end device may indicate the used preprocessing method to the receive end device. Such an indication may be an implicit indication, or may be an explicit indication. The indication may be sent by using various types of signaling. For example, in a downlink direction, in other words, when the transmit end device is a base station and the receive end device is UE, the signaling may be, for example, radio resource control (English: Radio Resource Control, RRC for short) signaling used in an LTE standard, or downlink control information (English: Downlink Control Information, DCI for short) sent by using a physical downlink control channel (English: Physical Downlink Control Channel, PDCCH for short). In an uplink direction, in other words, when the transmit end device is UE and the receive end device is a base station, a preprocessing method used by the UE may be indicated by the base station to the UE in advance. In this case, signaling used by the base station in the indication process may be the same as the signaling used in the downlink direction. In the uplink direction, in other words, when the transmit end device is UE and the receive end device is a base station, a preprocessing method used by the UE may be indicated by the UE to the base station. In this case, the signaling may be uplink control information (English: Uplink Control Information, UCI for short) sent by using a physical uplink control channel (Physical Uplink Control Channel, PUCCH for short).

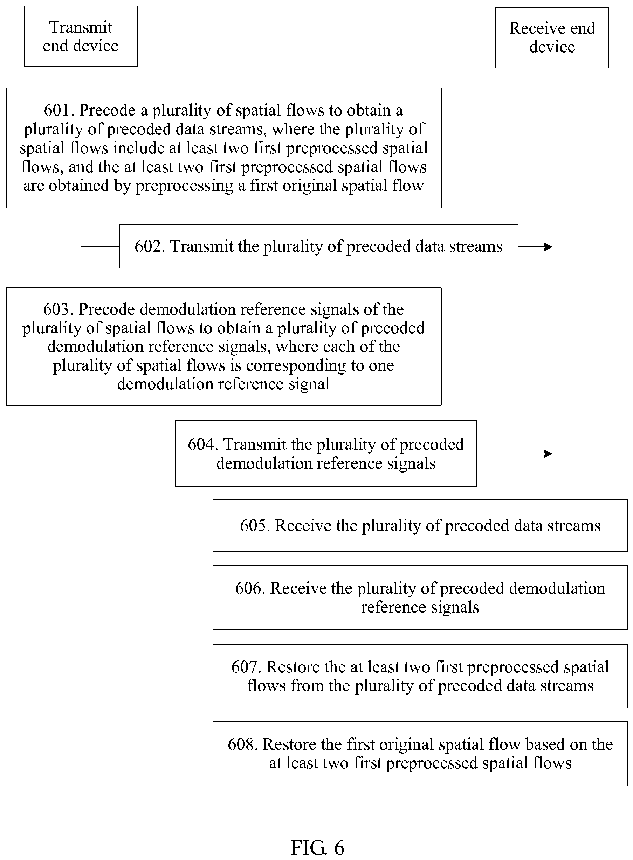

Step 505 may be implemented by the second restoration unit 262g in the embodiment shown in FIG. 4. For a specific implementation process, refer to the following embodiment shown in FIG. 6, and details are not described herein in this embodiment.

In conclusion, according to the data transmission method provided in this embodiment of the present invention, the transmit end device precodes the plurality of spatial flows to obtain the plurality of precoded data streams, and transmits the plurality of precoded data streams, where the plurality of spatial flows include the at least two first preprocessed spatial flows, and the at least two first preprocessed spatial flows are obtained by preprocessing the first original spatial flow; and the receive end device restores the at least two first preprocessed spatial flows from the plurality of precoded data streams, and then restores the first original spatial flow based on the at least two first preprocessed spatial flows. Because the at least two first preprocessed spatial flows in the plurality of spatial flows are obtained by preprocessing the first original spatial flow, another spatial flow may be unpreprocessed, and different spatial flows may be corresponding to different transmission schemes, a problem of relatively low scheduling flexibility is resolved, and scheduling flexibility is improved.

FIG. 6 is a flowchart of another data transmission method according to an embodiment of the present invention. An example in which the data transmission method is applied to the implementation environment shown in FIG. 1 is used for description in this embodiment. Referring to FIG. 6, the data transmission method may include the following steps.

Step 601: A transmit end device precodes a plurality of spatial flows to obtain a plurality of precoded data streams, where the plurality of spatial flows include at least two first preprocessed spatial flows, and the at least two first preprocessed spatial flows are obtained by preprocessing a first original spatial flow.

This embodiment of the present invention is described by using an example in which the transmit end device is the base station 01 in the implementation environment shown in FIG. 1, a first receive end device is the UE-02 in the implementation environment shown in FIG. 1, a second receive end device is the UE-03 in the implementation environment shown in FIG. 1, and a third receive end device is the UE-04 in the implementation environment shown in FIG. 1. Certainly, the transmit end device may be UE, and a receive end device may be a base station.

An original spatial flow may be a spatial flow obtained through layer mapping. For example, in an LTE system, a processing process on a physical channel may usually include scrambling, modulation mapping, layer mapping, precoding, resource element mapping, and orthogonal frequency division multiplexing (English: Orthogonal Frequency Division Multiplexing, OFDM for short) signal generation, and a processing object on the physical channel is usually a codeword. The codeword may be a bitstream obtained through coding processing (including at least channel coding processing), and the bitstream is scrambled to obtain a scrambled bitstream. A modulated symbol stream may be obtained after modulation mapping is performed on the scrambled bitstream, and a plurality of symbol layers (the symbol layer is also referred to as a spatial flow or a spatial layer) may be obtained through layer mapping is performed on the modulated symbol stream. The symbol layers are precoded to obtain a plurality of precoded symbol streams, and the precoded symbol streams are mapped to a plurality of resource elements (English: Resource Element, RE for short) through resource element mapping. Then OFDM symbol streams are obtained by using these resource elements in an OFDM signal generation phase, and the OFDM symbol streams are transmitted by using an antenna port. The OFDM symbol streams may be obtained through inverse fast Fourier transform (English: Inverse Fast Fourier Transform, IFFT for short) in the OFDM signal generation phase. The original spatial flow in this embodiment of the present invention may be a spatial flow obtained through layer mapping.

It should be noted that, for clearer description of the technical solution provided in this embodiment of the present invention, the original spatial flow mentioned in this embodiment of the present invention is described by using the spatial flow obtained through layer mapping in the existing LTE standard. However, a person skilled in the art should understand that, in addition to the spatial flow obtained through layer mapping in the LTE standard, the spatial flow mentioned in this embodiment of the present invention may be any modulated symbol flow obtained through processing such as modulation in a broad sense.

In this embodiment of the present invention, the transmit end device may precode the plurality of spatial flows to obtain the plurality of precoded data streams. The plurality of spatial flows may include the at least two first preprocessed spatial flows, at least two second preprocessed spatial flows, and at least one original spatial flow. The at least two first preprocessed spatial flows may be obtained by preprocessing the first original spatial flow, the at least two first preprocessed spatial flows may be directed to the first receive end device, and the first receive end device may be the UE-02 in the implementation environment shown in FIG. 1. The at least two second preprocessed spatial flows may be obtained by preprocessing a second original spatial flow, the at least two second preprocessed spatial flows may be directed to the third receive end device, and the third receive end device may be the UE-04 in the implementation environment shown in FIG. 1. The at least one original spatial flow may be a spatial flow directly obtained through layer mapping, and at least one of the at least one original spatial flow may be directed to the second receive end device. It can be learned from the foregoing that some of the plurality of precoded data streams are obtained through preprocessing and precoding, and some precoded data flows may be obtained through precoding without being preprocessed. The preprocessing may be transmit diversity processing or transmit diversity-based spatial multiplexing processing.

In this embodiment of the present invention, the transmit end device may precode the plurality of spatial flows by using a precoding technology. In the precoding technology, a precoding matrix that matches a channel attribute is used to process a spatial flow, so that a processed spatial flow matches a channel. The precoding matrix may include a plurality of precoding vectors, and a quantity of precoding vectors is the same as a quantity of spatial flows directed to a receive end device corresponding to the precoding matrix. Each of the plurality of spatial flows may be corresponding to one precoding vector, and different spatial flows in the plurality of spatial flows are corresponding to different precoding vectors. The transmit end device may precode the plurality of spatial flows by using a plurality of precoding vectors. Precoding the spatial flow can optimize a data transmission process and improve received signal quality (for example, a signal to interference plus noise ratio SINR).

During transmit diversity processing, redundant transmission is performed on the original spatial flow (for example, a symbol) in time, frequency, space (for example, antenna), or any combination of the three dimensions, to improve transmission reliability. In a specific implementation process, a quantity of redundant transmissions may be set based on a channel model or channel quality. An object of the redundant transmission may be the original spatial flow, or may be a processed original spatial flow, and the processing may include but is not limited to processing such as delaying, negation, conjugation, and rotation, and processing that is obtained through derivation, evolution, and combination by using the foregoing processing. Currently, frequently used transmit diversity may include but is not limited to space-time transmit diversity (English: Space-Time Transmit Diversity, STTD for short), space-frequency transmit diversity (English: Space-Frequency Transmit Diversity, SFTD for short), time switched transmit diversity (English: Time Switched Transmit Diversity, TSTD for short), frequency switched transmit diversity (English: Frequency Switched Transmit Diversity, FSTD for short), orthogonal transmit diversity (English: Orthogonal Transmit Diversity, OTD for short), cyclic delay diversity (English: Cyclic delay diversity, CDD for short), and diversity manners obtained through derivation, evolution, and combination by using the foregoing various diversity manners. For example, transmit diversity manners such as space time block coding (English: Space Time Block Coding, STBC for short), space frequency block coding (English: Space Frequency Block Coding, SFBC for short), and CDD are used in the LTE standard. In this embodiment of the present invention, the transmit diversity processing may be space-time transmit diversity processing, space-frequency transmit diversity processing, space-time-frequency transmit diversity processing, or cyclic delay diversity processing, and the foregoing various forms of diversity processing, and the transmit diversity-based spatial multiplexing processing may be large-delay CDD precoding processing. When the transmit diversity processing is the space-time transmit diversity processing, the space-frequency transmit diversity processing, or the space-time-frequency transmit diversity processing, a transmission scheme of performing both preprocessing and precoding on the spatial flow may be referred to as a beamformed transmit diversity (English: Beamformed Transmit Diversity, BTD for short) transmission scheme. When the transmit diversity processing is the cyclic delay diversity processing, a transmission scheme of performing both preprocessing and precoding on the spatial flow may be referred to an open-loop spatial multiplexing (English: open-loop spatial multiplexing, OLSM for short) transmission scheme, and a transmission scheme of only precoding the spatial flow may be referred to as a closed-loop spatial multiplexing (English: Closed-loop spatial multiplexing, CLSM for short) transmission scheme. It should be noted that the transmit diversity is generally described above by using examples. A person skilled in the art should understand that the transmit diversity includes a plurality of other implementations in addition to the foregoing examples, and therefore the foregoing description should not be construed as a limitation on the technical solutions of this application. It should be understood that the technical solutions of this application are applicable to various possible transmit diversity solutions. In addition, the preprocessing in this application is merely an example. In an actual application, the preprocessing includes but is not limited to the transmit diversity processing and the transmit diversity-based spatial multiplexing processing. Therefore, a person skilled in the art should understand that the transmit diversity processing and the transmit diversity-based spatial multiplexing processing in this application are merely examples and cannot be intended to limit the preprocessing in this application.

For example, it is assumed that the plurality of spatial flows include a first preprocessed spatial flow 11, a first preprocessed spatial flow 12, a second preprocessed spatial flow 21, a second preprocessed spatial flow 22, a second preprocessed spatial flow 23, and an original spatial flow 3. The first preprocessed spatial flow 11 and the first preprocessed spatial flow 12 are obtained by performing space-time transmit diversity processing on a first original spatial flow 1, and the second preprocessed spatial flow 21, the second preprocessed spatial flow 22, and the second preprocessed spatial flow 23 are obtained by performing cyclic delay diversity processing on a second original spatial flow 2. Assuming that the transmit end device precodes the first preprocessed spatial flow 11 to obtain a precoded data stream 110, precodes the first preprocessed spatial flow 12 to obtain a precoded data stream 120, precodes the second preprocessed spatial flow 21 to obtain a precoded data stream 210, precodes the second preprocessed spatial flow 22 to obtain a precoded data stream 220, precodes the second preprocessed spatial flow 23 to obtain a precoded data stream 230, and precodes the original spatial flow 3 to obtain a precoded data stream 30, the first preprocessed spatial flow 11 and the first preprocessed spatial flow 12 are directed to the first receive end device (for example, the UE-02), the second preprocessed spatial flow 21, the second preprocessed spatial flow 22, and the second preprocessed spatial flow 23 are directed to the third receive end device (for example, the UE-04), and the original spatial flow 3 is directed to the second receive end device (for example, the UE-03), the first receive end device may be a device using the BTD transmission scheme for data transmission, the second receive end device may be a device using the CLSM transmission scheme for data transmission, and the third receive end device may be a device using the OLSM transmission scheme for data transmission. In this embodiment of the present invention, a base station may indicate a transmission scheme to the UE by using downlink signaling, so that the UE can use a corresponding transmission scheme for data transmission. For example, the base station 01 instructs, by using downlink signaling, the UE-02 to use the BTD transmission scheme for data transmission, instructs, by using downlink signaling, the UE-03 to use the CLSM transmission scheme for data transmission, and instructs, by using downlink signaling, the UE-04 to use the OLSM transmission scheme for data transmission. In this embodiment of the present invention, the base station may indicate a transmission scheme by using a format of the downlink signaling, or may indicate a transmission scheme by using content of the downlink signaling. This is not limited in this embodiment of the present invention. It should be noted that the transmission scheme is generally described above by using examples. A person skilled in the art should understand that the transmission scheme includes a plurality of other transmission schemes in addition to the foregoing examples, and therefore the foregoing description should not be construed as a limitation on the technical solutions of this application.

It should be noted that in a specific implementation process, a precoding data stream obtained through precoding usually includes a plurality of data streams. A specific quantity of data streams is related to a quantity of physical antennas or a quantity of antenna ports. Content of this part is clearly described in a related technology, and details are not described herein in this embodiment of the present invention.

It should be noted that the data transmission method provided in this embodiment of the present invention is applicable to a MIMO system, and a precoding technology is usually used in the MIMO system to implement spatial multiplexing, so that a plurality of spatial flows are transmitted between the transmit end device and the receive end device at a time, thereby increasing a system throughput. The MIMO system usually includes a single-user MIMO (English: Single-user MIMO, SU-MIMO for short) scenario and a multi-user MIMO (English: Multi-user MIMO, MU-MIMO for short) scenario. In the SU-MIMO scenario, a plurality of spatial flows on which spatial multiplexing is to be performed are directed to a same receive end device, and in the MU-MIMO scenario, a plurality of spatial flows on which spatial multiplexing is to be performed are directed to at least two receive end devices. Currently, the precoding technology has been used by a plurality of wireless communication standards, including but not limited to the LTE standard. In the LTE standard, precoding means processing a transmit signal based on a specified matrix in a broad sense. Therefore, the precoding in the LTE standard not only includes precoding used for spatial multiplexing, but also includes precoding used for transmit diversity, and the like. However, unless otherwise specified, the precoding in the technical solution provided in this embodiment of the present invention means only precoding performed on the spatial flow by using a precoding matrix for the purpose of spatial multiplexing, but does not include precoding used for transmit diversity. In addition, the precoding in the technical solution provided in this embodiment of the present invention may be precoding that is not based on channel state information, and such precoding is also referred to as open-loop precoding, and is similar to, for example, precoding not combined with CDD and precoding used for large-delay CDD in the LTE standard, but is not limited thereto. In addition, the precoding in the technical solution provided in this embodiment of the present invention may be precoding that is based on state information, and such precoding is also referred to as closed-loop precoding, and is similar to, for example, closed-loop spatial multiplexing in the LTE standard, but is not limited thereto. Specific precoding forms and types are not limited in this embodiment of the present invention.

It should be understood that although a plurality of antennas are deployed on a transmit end device and a receive end device in an increasing quantity of communications systems, a person skilled in the art should understand that such a communications system may also be used to implement single-input single-output (English: Single-Input Single-Output, SISO for short), single-input multiple-output

(English: Single-Input Multiple-output, SIMO for short), and multiple-input single-output (English: Multiple-Input Single-Output, MISO for short) in addition to MIMO. Therefore, it should be understood that the MIMO described in this specification includes various application forms of a multiple-antenna technology, and includes, for example, the SISO, the SIMO, the MISO, and the MIMO described above, but is not limited thereto.

It should be further noted that in this embodiment of the present invention, Y=F1(S) may be used to precode an original spatial flow to obtain a precoded data stream, where Y represents the precoded data stream, F1 represents precoding, and S represents the original spatial flow. If transmit diversity processing performed on the original spatial flow is also considered as precoding, two levels of precoding are performed on the original spatial flow in this embodiment. In this case, Y=F1(F2(S)) may be used to precode the original spatial flow to obtain the precoded data stream, where Y represents the precoded data stream, F2 represents transmit diversity processing, F1 represents precoding, and S represents the original spatial flow. It should be further noted that step 601 may be specifically implemented by the first precoding unit 262a in the embodiment shown in FIG. 3. A specific implementation process in which the transmit end device performs transmit diversity on the original spatial flow and precodes the plurality of spatial flows is clearly described in a related technology, and details are not described herein in this embodiment of the present invention.

Step 602: The transmit end device transmits the plurality of precoded data streams to a receive end device.

After obtaining the plurality of precoded data streams, the transmit end device may send the plurality of precoded data streams to the receive end device. The receive end device may include the first receive end device, the second receive end device, and the third receive end device. Optionally, the transmit end device transmits precoded data streams obtained by precoding the at least two first preprocessed spatial flows to the first receive end device, transmits, to the second receive end device, a precoded data stream obtained by precoding the at least one original spatial flow directed to the second receive end device, and transmits precoded data streams obtained by precoding the at least two second preprocessed spatial flows to the third receive end device.

For example, the first receive end device is the UE-02, the second receive end device is the UE-03, the third receive end device is the UE-04, and the transmit end device precodes the at least two first preprocessed spatial flows to obtain the precoded data stream 110 and the precoded data stream 120, precodes the at least one original spatial flow directed to the second receive end device, to obtain the precoded data stream 30, and precodes the at least two second preprocessed spatial flows to obtain the precoded data stream 210, the precoded data stream 220, and the precoded data stream 230. Therefore, the transmit end device transmits the precoded data stream 110 and the precoded data stream 120 to the UE-02, transmits the precoded data stream 30 to the UE-03, and transmits the precoded data stream 210, the precoded data stream 220, and the precoded data stream 230 to the UE-04. A person skilled in the art should understand that the foregoing precoded data streams are actually multiplexed together for transmission. When each multiplexed precoded data stream arrives at any receive end device, a precoded data stream directed to another receive end device should be considered as interference. However, the interference is greatly reduced under functions of both precoding and a channel of the receive end device. Content related to this part is explained above, and therefore details are not described herein again.

It should be noted that step 602 may be specifically implemented by the first transmitting unit 262b in the embodiment shown in FIG. 3. A specific implementation process in which the transmit end device transmits the plurality of precoded data streams to the receive end device is clearly described in a related technology, and details are not described herein in this embodiment of the present invention.

Step 603: The transmit end device precodes demodulation reference signals of the plurality of spatial flows to obtain a plurality of precoded demodulation reference signals, where each of the plurality of spatial flows is corresponding to one demodulation reference signal.

In this embodiment of the present invention, each of the plurality of spatial flows is corresponding to one demodulation reference signal.

The transmit end device may precode the demodulation reference signals of the plurality of spatial flows to obtain the plurality of precoded demodulation reference signals. Optionally, the transmit end device may precode a demodulation reference signal by using a precoding vector that is the same as a precoding vector used to precode a corresponding spatial flow, so that the receive end device can demodulate the corresponding spatial flow by using the demodulation reference signal of the spatial flow.

In this embodiment of the present invention, each precoding vector may be corresponding to one DMRS port, and different precoding vectors are corresponding to different DMRS ports. A DMRS may be used for channel demodulation, because a precoding vector used to precode each spatial flow is the same as a precoding vector used to precode a DMRS corresponding to the spatial flow, but the DMRS does not need to be preprocessed. In other words, an original spatial flow is preprocessed to obtain at least two preprocessed spatial flows, these preprocessed spatial flows are associated with respective DMRSs, and these DMRSs may be different from each other. The receive end device may demodulate a received precoded data stream based on a DMRS corresponding to a DMRS port, to obtain a spatial flow.

It should be noted that in this embodiment of the present invention, at least two preprocessed spatial flows may be obtained by preprocessing an original spatial flow, and in this case, after obtaining the foregoing spatial flow through demodulation, the receive end device further needs to restore the original spatial flow from the at least two preprocessed spatial flows based on a preprocessing manner of the transmit end device.

For example, a demodulation reference signal corresponding to the first preprocessed spatial flow 11 is S11, a demodulation reference signal corresponding to the first preprocessed spatial flow 12 is S12, a demodulation reference signal corresponding to the second preprocessed spatial flow 21 is S21, a demodulation reference signal corresponding to the second preprocessed spatial flow 22 is S22, a demodulation reference signal corresponding to the second preprocessed spatial flow 23 is S23, and a demodulation reference signal corresponding to the original spatial flow 3 is S3. In this case, the transmit end device precodes the demodulation reference signal S11 to obtain a precoded demodulation reference signal S110, precodes the demodulation reference signal S12 to obtain a precoded demodulation reference signal S120, precodes the demodulation reference signal S21 to obtain a precoded demodulation reference signal S210, precodes the demodulation reference signal S22 to obtain a precoded demodulation reference signal S220, precodes the demodulation reference signal S23 to obtain a precoded demodulation reference signal S230, and precodes the demodulation reference signal S3 to obtain a precoded demodulation reference signal S30.

It should be noted that step 603 may be specifically implemented by the second precoding unit 262c in the embodiment shown in FIG. 3. The transmit end device may precode, by using Z=F1(X), the demodulation reference signals corresponding to the plurality of spatial flows to obtain the precoded demodulation reference signals, where Z represents the precoded demodulation reference signal,

F1 represents precoding, and X represents the demodulation reference signal. A specific precoding process is clearly described in a related technology, and details are not described herein in this embodiment of the present invention.

It should be further noted that in an actual application, step 601 and step 604 in this embodiment of the present invention may be considered to be simultaneously performed. A specific implementation process of precoding the demodulation reference signals of the plurality of spatial flows, estimating precoded channels based on the precoded demodulation reference signals, and restoring the spatial flows from the precoded data streams based on an estimation result is clearly described in a related technology, and details are not described herein in this embodiment of the present invention.

Step 604: The transmit end device transmits the plurality of precoded demodulation reference signals to the receive end device.

After obtaining the plurality of precoded demodulation reference signals, the transmit end device may send the plurality of precoded demodulation reference signals to the receive end device. Because each spatial flow is corresponding to one demodulation reference signal, the transmit end device may transmit a corresponding precoded demodulation reference signal to a receive end device to which a corresponding spatial flow is directed.

For example, the transmit end device transmits the precoded demodulation reference signal S110 and the precoded demodulation reference signal S120 to the UE-02, transmits the precoded demodulation reference signal S30 to the UE-03, and transmits the precoded demodulation reference signal S210, the precoded demodulation reference signal S220, and the precoded demodulation reference signal S230 to the UE-04.

It should be noted that step 604 may be specifically implemented by the second transmitting unit 262d in the embodiment shown in FIG. 3. A specific implementation process in which the transmit end device transmits the plurality of precoded demodulation reference signals to the receive end device is clearly described in a related technology, and details are not described herein in this embodiment of the present invention.

It should be further noted that in this embodiment of the present invention, because the plurality of spatial flows include a preprocessed spatial flow obtained through preprocessing, when demodulating corresponding data, the receive end device needs to learn not only a DMRS port number, but also a preprocessing manner in which the transmit end device preprocesses a corresponding spatial flow. For example, the first receive end device needs to learn a preprocessing manner in which the transmit end device preprocesses the at least two first preprocessed spatial flows, and the third receive end device needs to learn a preprocessing manner in which the transmit end device preprocesses the at least two second preprocessed spatial flows. The preprocessing may be transmit diversity processing or transmit diversity-based spatial multiplexing processing, the transmit diversity processing includes but is not limited to space-time transmit diversity processing, space-frequency transmit diversity processing, space-time-frequency transmit diversity processing, or cyclic delay diversity processing, and the transmit diversity-based spatial multiplexing processing may be large-delay CDD precoding processing. Therefore, the transmit end device further needs to transmit a preprocessing manner corresponding to a corresponding spatial flow to the receive end device. An example in which the transmit end device is a base station and the receive end device is UE is used for description below. When the transmit end device is UE and the receive end device is a base station, refer to the following description.

Specifically, the base station may send, to the UE by using downlink signaling, DMRS port information (for example, a port identifier) corresponding to each spatial flow and/or information about a preprocessing manner used to preprocess the spatial flow. The UE may perform data demodulation based on the DMRS port information corresponding to each spatial flow and/or the preprocessing manner used to preprocess the spatial flow. The base station may send, in the following several manners, DMRS port information corresponding to a spatial flow and/or information about a preprocessing manner used to preprocess the spatial flow:
Manner 1: The base station sends, to the UE by using downlink signaling, a DMRS port identifier corresponding to each spatial flow and the information about the preprocessing manner corresponding to each spatial flow. The information about the preprocessing manner corresponding to each spatial flow is also information about a preprocessing manner in which the base station preprocesses an original spatial flow to obtain a corresponding preprocessed spatial flow.

The port identifier may be specifically a port number. For example, the base station indicates, to the UE-02 by using downlink signaling, that identifiers of ports used by the base station to send a DMRS are x+1 and x+2, and also indicates, to the UE-02, that a preprocessing manner used by the base station is space-time transmit diversity processing. For another example, the base station indicates, to the UE-02 by using downlink signaling, that identifiers of ports used by the base station to send a DMRS are x, x+1, x+2, and x+3, and also indicates, to the UE-02, that a preprocessing manner used by the base station is space-frequency transmit diversity processing. When the base station indicates a preprocessing manner to the UE by using downlink signaling, several fixed bits may be allocated to specify the preprocessing manner. For example, 2 bits are used to indicate the preprocessing manner, and 2 bits can indicate a total of four preprocessing manners. For example, 00 indicates space-time transmit diversity processing, and 01 indicates space-frequency transmit diversity processing. Certainly, the base station may alternatively indicate the preprocessing manner in another manner.

Manner 2: The base station sends a DMRS port identifier corresponding to each spatial flow to the UE by using downlink signaling, and the DMRS port identifier or a port quantity corresponding to each spatial flow is uniquely corresponding to one preprocessing manner.

In Manner 2, a DMRS port identifier or a port quantity corresponding to a spatial flow may indicate a preprocessing manner, there is a mapping relationship between a port identifier or a port quantity and a preprocessing manner, and the DMRS port identifier or the port quantity corresponding to each spatial flow is uniquely corresponding to one preprocessing manner. The UE may determine a preprocessing manner based on a DMRS port identifier or a port quantity and the mapping relationship. For example, the mapping relationship is that space-time transmit diversity processing needs to be used when ports whose port identifiers are x+1 and x+2 are used, or space-time transmit diversity processing needs to be used when two ports are used. In this case, when the UE learns, by using downlink signaling, that DMRS port identifiers corresponding to a spatial flow are x+1 and x+2, the UE may determine, based on the mapping relationship, that a preprocessing manner used by the base station is space-time transmit diversity processing.

Manner 3: The base station sends the information about the preprocessing manner corresponding to each spatial flow to the UE by using downlink signaling, and the preprocessing manner corresponding to each spatial flow is uniquely corresponding to one group of DMRS port identifiers.

The information about the preprocessing manner may be an identifier of the preprocessing manner, and the base station may indicate the preprocessing manner by using one or more bits. In Manner 3, a preprocessing manner corresponding to a spatial flow may indicate a DMRS port identifier, there is a mapping relationship between a preprocessing manner and a port identifier, and the preprocessing manner used for each spatial flow may be uniquely corresponding to one group of DMRS port identifiers. The UE may determine a DMRS port identifier based on a preprocessing manner and the mapping relationship, and then determine a DMRS port based on the DMRS port identifier. For example, the base station indicates, to the UE-02 by using downlink signaling, that a preprocessing manner used by the base station is space-time transmit diversity processing, and the mapping relationship is that ports whose port identifiers are x+1 and x+2 need to be used when space-time transmit diversity processing is used for preprocessing. In this case, the UE-02 may learn, based on the preprocessing manner indicated by the base station and the mapping relationship, that DMRS port identifiers are x+1 and x+2.

Manner 4: The base station sends a DMRS port quantity corresponding to each spatial flow to the UE by using downlink signaling, and the DMRS port quantity corresponding to each spatial flow is uniquely corresponding to one preprocessing manner and one group of DMRS port identifiers.

In Manner 4, the base station indicates, by using a DMRS port quantity corresponding to a spatial flow, a processing manner and a DMRS port identifier used for the spatial flow, there is a mapping relationship between a preprocessing manner, a DMRS port quantity, and a DMRS port identifier, and the DMRS port quantity corresponding to each spatial flow is uniquely corresponding to one preprocessing manner and one group of DMRS port identifiers. The UE may determine a preprocessing manner and a DMRS port identifier based on a DMRS port quantity and the mapping relationship, and then determine a DMRS port based on the DMRS port identifier. For example, the base station indicates, to the UE-02 by using downlink signaling, that a DMRS port quantity corresponding to a spatial flow is 2, and the mapping relationship is that when two ports are used, space-time transmit diversity processing needs to be used for preprocessing, and ports whose port identifiers are x+1 and x+2 need to be used for a DMRS corresponding to a spatial flow. The UE-02 may determine, based on the DMRS port quantity that is corresponding to the spatial flow and that is indicated by the base station and the mapping relationship, that a preprocessing manner used for the spatial flow is space-time transmit diversity processing, and DMRS port identifiers corresponding to the spatial flow are x+1 and x+2.

Manner 5: The base station sends, to the UE by using downlink signaling, a DMRS port quantity corresponding to each spatial flow and the information about the preprocessing manner corresponding to each spatial flow, and the DMRS port quantity corresponding to each spatial flow and the preprocessing manner corresponding to each spatial flow are uniquely corresponding to one group of DMRS port identifiers.

In Manner 5, the base station indicates, by using a DMRS port quantity corresponding to a spatial flow and a preprocessing manner corresponding to the spatial flow, a DMRS port identifier corresponding to the spatial flow, there is a mapping relationship between a preprocessing manner, a DMRS port quantity, and a DMRS port identifier, and the DMRS port quantity corresponding to each spatial flow and the preprocessing manner corresponding to each spatial flow are uniquely corresponding to one group of DMRS port identifiers. The UE may determine a DMRS port identifier based on a DMRS port quantity and a preprocessing manner corresponding to a spatial flow that are indicated by the base station and the mapping relationship. For example, the base station indicates, to the UE-02 by using downlink signaling, that a preprocessing manner corresponding to a spatial flow is space-time transmit diversity processing and a DMRS port quantity is 2, and the mapping relationship is that ports whose port identifiers are x+1 and x+2 need to be used for a spatial flow for which a preprocessing manner is space-time transmit diversity processing and a DMRS port quantity is 2.

Step 605: The receive end device receives the plurality of precoded data streams transmitted by the transmit end device.

The plurality of precoded data streams are obtained by the transmit end device by precoding the plurality of spatial flows. When the transmit end device transmits the plurality of precoded data streams to the receive end device, the receive end device may receive the plurality of precoded data streams transmitted by the transmit end device. The receive end device may be the first receive end device, the second receive end device, or the third receive end device. Optionally, when the receive end device is the first receive end device, the receive end device receives the precoded data streams that are obtained by precoding the at least two first preprocessed spatial flows and that are transmitted by the transmit end device. When the receive end device is the second receive end device, the receive end device receives the precoded data stream that is obtained by precoding the at least one original spatial flow and that is transmitted by the transmit end device. When the receive end device is the third receive end device, the receive end device receives the precoded data streams that are obtained by precoding the at least two second preprocessed spatial flows and that are transmitted by the transmit end device. A person skilled in the art should understand that the foregoing precoded data streams are actually multiplexed together for transmission. When each multiplexed precoded data stream arrives at any receive end device, a precoded data stream directed to another receive end device should be considered as interference. However, the interference is greatly reduced under functions of both precoding and a channel of the receive end device. Content related to this part is explained above, and therefore details are not described herein again.

For example, the first receive end device is the UE-02, the second receive end device is the UE-03, and the third receive end device is the UE-04. When the receive end device is the first receive end device, the UE-02 receives the precoded data stream 110 and the precoded data stream 120 that are transmitted by the transmit end device. When the receive end device is the second receive end device, the UE-03 receives the precoded data stream 30 transmitted by the transmit end device. When the receive end device is the third receive end device, the UE-04 receives the precoded data stream 210, the precoded data stream 220, and the precoded data stream 230 that are transmitted by the transmit end device. It should be noted that a person skilled in the art should understand that actually, when the foregoing precoded data flows arrive at each receive end device after being propagated, a precoded data stream received by each receive end device is not a precoded data flow transmitted by the transmit end device, but a precoded data stream that is transmitted by the transmit end device and that is obtained after channel propagation. In a propagation process, a precoded data stream is affected by a channel, and therefore a precoded data stream received by the receive end device is different from a precoded data stream transmitted by the transmit end device. However, for ease of description, in a process of describing this application in this specification, a same name and number are used to indicate the precoded data stream transmitted by the transmit end device and the precoded data stream received by the receive end device.

It should be noted that step 605 may be specifically implemented by the first receiving unit 262e in the embodiment shown in FIG. 4. A specific implementation process in which the receive end device receives the plurality of precoded data streams transmitted by the transmit end device is clearly described in a related technology, and details are not described herein in this embodiment of the present invention.

Step 606: The receive end device receives the plurality of precoded demodulation reference signals transmitted by the transmit end device.

The plurality of precoded demodulation reference signals are obtained by precoding the demodulation reference signals of the plurality of spatial flows, each of the plurality of spatial flows is corresponding to one demodulation reference signal, and a precoding vector used to precode each spatial flow is the same as a precoding vector used to precode a demodulation reference signal of each spatial flow. When the transmit end device transmits the plurality of precoded demodulation reference signals to the receive end device, the receive end device may receive the plurality of precoded demodulation reference signals transmitted by the transmit end device. The receive end device may be the first receive end device, the second receive end device, or the third receive end device.

For example, with reference to both step 604 and step 605, when the receive end device is the first receive end device and the first receive end device is the UE-02, the UE-02 receives the precoded demodulation reference signal S110 and the precoded demodulation reference signal S120 that are transmitted by the transmit end device. When the receive end device is the second receive end device and the second receive end device is the UE-03, the UE-03 receives the precoded demodulation reference signal S30 transmitted by the transmit end device. When the receive end device is the third receive end device and the third receive end device is the UE-04, the UE-04 receives the precoded demodulation reference signal S210, the precoded demodulation reference signal S220, and the precoded demodulation reference signal S230 that are transmitted by the transmit end device.

It should be noted that step 606 may be specifically implemented by the second receiving unit 262h in the embodiment shown in FIG. 4. A specific implementation process in which the receive end device receives the plurality of precoded demodulation reference signals is clearly described in a related technology, and details are not described herein in this embodiment of the present invention.

Step 607: The receive end device restores the at least two first preprocessed spatial flows from the plurality of precoded data streams.

It can be learned from the foregoing description that the receive end device in step 607 is the first receive end device. After receiving the plurality of precoded data streams, the first receive end device may restore the at least two first preprocessed spatial flows from the plurality of precoded data streams. Optionally, the first receive end device may restore the at least two first preprocessed spatial flows from the plurality of precoded data streams based on the precoded demodulation reference signals of the at least two first preprocessed spatial flows.

In this embodiment of the present invention, each precoding vector may be corresponding to one DMRS port, and different precoding vectors are corresponding to different DMRS ports. A DMRS may be used for channel demodulation, because a precoding vector used to precode each spatial flow is the same as a precoding vector used to precode a DMRS corresponding to the spatial flow, but the DMRS does not need to be preprocessed. In other words, an original spatial flow is preprocessed to obtain at least two spatial flows, these spatial flows are associated with respective DMRSs, and these DMRSs are different from each other. The receive end device may demodulate a received precoded data stream based on a DMRS corresponding to a DMRS port, to obtain a spatial flow.

It can be learned from the foregoing that, to restore the at least two first preprocessed spatial flows from the plurality of precoded data streams, the first receive end device needs to obtain the precoded demodulation reference signals of the at least two first preprocessed spatial flows and DMRS port identifiers corresponding to the at least two first preprocessed spatial flows. Therefore, the first receive end device may further receive a plurality of precoded demodulation reference signals. The plurality of precoded demodulation reference signals are obtained by precoding the demodulation reference signals of the at least two first preprocessed spatial flows. Because a precoding vector used to precode each first preprocessed spatial flow is the same as a precoding vector used to precode a DMRS corresponding to each first preprocessed spatial flow, the at least two first preprocessed spatial flows may be obtained through demodulation based on the precoded demodulation reference signals and the DMRS port identifiers of the at least two first preprocessed spatial flows. For example, the first receive end device restores the first preprocessed spatial flow 11 and the first preprocessed spatial flow 12 based on the precoded demodulation reference signal S110 and the precoded demodulation reference signal S120.

It should be noted that step 607 may be implemented by the first restoration unit 262f in the embodiment shown in FIG. 4. A process in which the first receive end device restores the at least two first preprocessed spatial flows from the precoded data streams based on the precoded demodulation reference signals of the at least two first preprocessed spatial flows is clearly described in a related technology, and details are not described herein in this embodiment of the present invention.

It should be further noted that an example in which the receive end device restores the at least two first preprocessed spatial flows is used for description in this embodiment of the present invention. When the receive end device is the second receive end device, the second receive end device restores the at least one original spatial flow from a plurality of precoded data streams based on the precoded demodulation reference signal of the at least one original spatial flow. When the receive end device is the third receive end device, the third receive end device restores the at least two second preprocessed spatial flows from a plurality of precoded data flows based on the precoded demodulation reference signals of the at least two second preprocessed spatial flows. Details are not described herein in this embodiment of the present invention.

Step 608: The receive end device restores the first original spatial flow based on the at least two first preprocessed spatial flows.

It can be learned from the foregoing description that the receive end device in step 607 is the first receive end device. After restoring the at least two first preprocessed spatial flows, the first receive end device may restore the first original spatial flow based on the at least two first preprocessed spatial flows. Specifically, the first receive end device may determine, based on related descriptions in step 604, a preprocessing manner corresponding to the at least two first preprocessed spatial flows, so as to restore the first original spatial flow based on the at least two first preprocessed spatial flows and the corresponding preprocessing manner.

For example, the first receive end device may determine a preprocessing manner of the first preprocessed spatial flow 11 and the first preprocessed spatial flow 12 based on related descriptions in step 604, where the preprocessing manner of the first preprocessed spatial flow 11 and the first preprocessed spatial flow 12 may be space-time transmit diversity processing, and then the first receive end device restores the first original spatial flow 1 based on the first preprocessed spatial flow 11, the first preprocessed spatial flow 12, and the space-time transmit diversity processing.

It should be noted that step 608 may be implemented by the second restoration unit 262g in the embodiment shown in FIG. 4. An example in which the receive end device restores the first original spatial flow based on the at least two first preprocessed spatial flows is used for description in this embodiment of the present invention. When the receive end device is the third receive end device, the third receive end device restores the second original spatial flow based on the at least two second preprocessed spatial flows. When the receive end device is the second receive end device, the second receive end device does not need to perform step 608.

It should be further noted that a chronological order of steps of the data transmission method provided in this embodiment of the present invention may be properly adjusted, and the steps may also be correspondingly added or deleted based on a case. Any variation readily figured out by a person skilled in the art within the technical scope disclosed in the present invention shall fall within the protection scope of this application, and details are not described herein.

In conclusion, according to the data transmission method provided in this embodiment of the present invention, the transmit end device precodes the plurality of spatial flows to obtain the plurality of precoded data streams, and transmits the plurality of precoded data streams, where the plurality of spatial flows include the at least two first preprocessed spatial flows, and the at least two first preprocessed spatial flows are obtained by preprocessing the first original spatial flow; and the receive end device restores the at least two first preprocessed spatial flows from the plurality of precoded data streams, and then restores the first original spatial flow based on the at least two first preprocessed spatial flows. Because the at least two first preprocessed spatial flows in the plurality of spatial flows are obtained by preprocessing the first original spatial flow, another spatial flow may be unpreprocessed, and different spatial flows may be corresponding to different transmission schemes, a problem of relatively low scheduling flexibility is resolved, and scheduling flexibility is improved.

In LTE or LTE-A, a quantity of antennas on a data transmit end continues to increase rapidly, and the increase in the quantity of antennas can provide a higher spatial degree of freedom, thereby making downlink transmission scheme diversification possible. According to the data transmission method provided in this embodiment of the present invention, based on the downlink transmission scheme diversification, different UEs use different transmission schemes for data transmission, thereby improving scheduling flexibility.

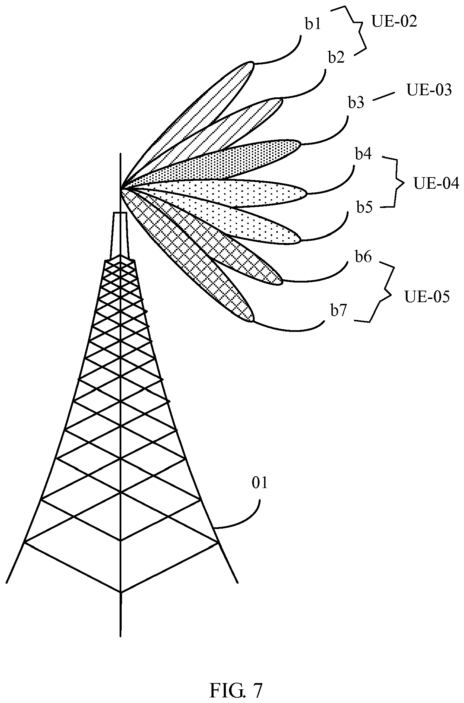

FIG. 7 is a schematic diagram of a data transmission method according to an embodiment of the present invention. With reference to FIG. 1 and FIG. 7, the following briefly describes a difference between the data transmission method provided in this embodiment of the present invention and a data transmission method in a related technology.

Referring to FIG. 7, the base station 01 has a beam b1, a beam b2, a beam b3, a beam b4, a beam b5, a beam b6, and a beam b7, the base station 01 may further have ports whose port numbers are respectively x, x+1, ..., and y (typically, port numbers are consecutive in a standard), and the base station 01 may schedule the UE-02, the UE-03, the UE-04, and the UE-05 to use transmission schemes for data transmission.

In this embodiment of the present invention, the base station 01 may instruct, by using downlink signaling, the UE-02, the UE-03, the UE-04, and the UE-05 to use corresponding transmission schemes for data transmission, and the base station 01 may allocate ports to the UEs. The base station 01 may indicate a transmission scheme by using a format of the downlink signaling, or may indicate a transmission scheme by using content of the downlink signaling. For example, the base station 01 instructs, by using downlink signaling, the UE-02 to use a BTD transmission scheme for data transmission and allocates ports whose port numbers are x+1 and x+2 to the UE-02, the base station 01 instructs, by using downlink signaling, the UE-03 to use a CLSM transmission scheme for data transmission and allocates a port whose port number is x to the UE-03, the base station 01 instructs, by using downlink signaling, the UE-04 to use an OLSM transmission scheme for data transmission and allocates ports whose port numbers are x+3, ..., and y-2 to the UE-04, and the base station 01 instructs, by using downlink signaling, the UE-05 to use the CLSM transmission scheme for data transmission and allocates ports whose port numbers are y-1 and y to the UE-05. The UEs may use corresponding transmission schemes for data transmission. For example, the beam b1 and the beam b2 of the base station 01 are occupied for data transmission performed between the base station 01 and the UE-02 by using the BTD transmission scheme, the beam b3 of the base station 01 is occupied for data transmission performed between the base station 01 and the UE-03 by using the CLSM transmission scheme, the beam b4 and the beam b5 of the base station 01 are occupied for data transmission performed between the base station 01 and the UE-04 by using the OLSM transmission scheme, and the beam b6 and the beam b7 of the base station 01 are occupied for data transmission performed between the base station 01 and the UE-05 by using the CLSM transmission scheme. Because the UE-02, the UE-03, the UE-04, and the UE-05 use different transmission schemes for data transmission, scheduling flexibility of the base station 01 is relatively high, and when channel environments are diversified, an optimal scheduling result can be achieved, thereby improving spectrum efficiency.

It should be noted that in this embodiment of the present invention, during data transmission performed by using the BTD transmission scheme and the OLSM transmission scheme, the base station preprocesses an original spatial flow. Therefore, the base station 01 further needs to indicate corresponding precoding manners to the UE-02 and the UE-04 by using downlink signaling, so that the UE-02 and the UE-04 can restore original spatial flows. For example, the base station indicates SFBC to the UE-02 and indicates CDD to the UE-04 by using downlink signaling.

In a related technology, the base station 01 schedules the UE-02, the UE-03, the UE-04, and the UE-05 to use a same transmission scheme for data transmission and allocates ports to the UEs. For example, the base station 01 schedules all of the UE-02, the UE-03, the UE-04, and the UE-05 to use the CLSM transmission scheme for data transmission, allocates ports whose port numbers are x+1 and x+2 to the UE-02, allocates a port whose port number is x to the UE-03, allocates ports whose port numbers are x+3, ..., and y-2 to the UE-04, and allocates ports whose port numbers are y-1 and y to the UE-05. After the base station schedules the UEs and allocates the ports to the UEs, the UEs use the same transmission scheme for data transmission. For example, the CLSM transmission scheme is used for data transmission between the base station 01 and each of the UE-02, the UE-03, the UE-04, and the UE-05, the UE-02 occupies the beam b1 and the beam b2 of the base station 01, the UE-03 occupies the beam b3 of the base station 01, the UE-04 occupies the beam b4 and the beam b5 of the base station 01, and the UE-05 occupies the beam b6 and the beam b7 of the base station 01. When the base station 01 schedules all of the UE-02, the UE-03, the UE-04, and the UE-05 to use the CLSM transmission scheme for data transmission, time-frequency resource spatial multiplexing can be implemented to improve system spectrum efficiency. However, because the base station 01 schedules the UE-02, the UE-03, the UE-04, and the UE-05 to use the same transmission scheme for data transmission, scheduling flexibility of the base station 01 is relatively low, and when channel environments are diversified, an optimal scheduling result cannot be achieved, and spectrum efficiency is affected.

The following are apparatus embodiments of this application, and the apparatus embodiments may be used to execute the method embodiments of this application. For details not disclosed in the apparatus embodiments of this application, refer to the method embodiments of this application.

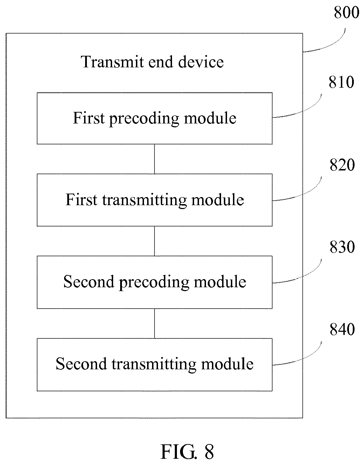

FIG. 8 is a block diagram of a transmit end device 800 according to an embodiment of the present invention. The transmit end device 800 may become a part or all of the base station 01 in the implementation environment shown in FIG. 1 by using software, hardware, or a combination thereof, and the transmit end device 800 performs some of the methods provided in the embodiments shown in FIG. 5 and FIG. 6. Referring to FIG. 8, the transmit end device 800 may include a first precoding module 810, a first transmitting module 820, a second precoding module 830, and a second transmitting module 840.

The first precoding module 810 has a function that is the same as or similar to that of the first precoding unit 262a shown in FIG. 3.

The first transmitting module 820 has a function that is the same as or similar to that of the first transmitting unit 262b shown in FIG. 3.

The second precoding module 830 has a function that is the same as or similar to that of the second precoding unit 262c shown in FIG. 3.

The second transmitting module 840 has a function that is the same as or similar to that of the second transmitting unit 262d shown in FIG. 3.

For directions of at least two first preprocessed spatial flows, another spatial flow included in a plurality of spatial flows and a direction of the another spatial flow, and preprocessing, refer to the embodiment shown in FIG. 3. Details are not described herein again in this embodiment.

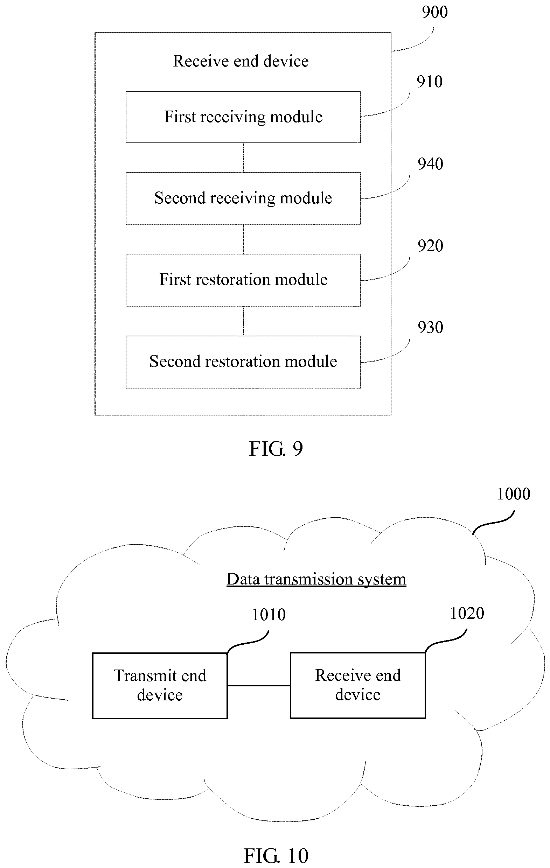

FIG. 9 is a block diagram of a receive end device 900 according to an embodiment of the present invention. The receive end device 900 may become a part or all of the UE-02 in the implementation environment shown in FIG. 1 by using software, hardware, or a combination thereof, and the receive end device 900 performs some of the methods provided in the embodiments shown in FIG. 5 and FIG. 6. Referring to FIG. 9, the receive end device 900 may include a first receiving module 910, a first restoration module 920, a second restoration module 930, and a second receiving module 940.

The first receiving module 910 has a function that is the same as or similar to that of the first receiving unit 262e shown in FIG. 4.

The first restoration module 920 has a function that is the same as or similar to that of the first restoration unit 262f shown in FIG. 4.

The second restoration module 930 has a function that is the same as or similar to that of the second restoration unit 262g shown in FIG. 4.

The second receiving module 940 has a function that is the same as or similar to that of the second receiving unit 262h shown in FIG. 4.

For directions of at least two first preprocessed spatial flows and preprocessing, refer to the embodiment shown in FIG. 4, and details are not described herein again in this embodiment.

FIG. 10 is a schematic structural diagram of a data transmission system 1000 according to an embodiment of the present invention. Referring to FIG. 10, the data transmission system 1000 may include a transmit end device 1010 and a receive end device 1020.

In a possible implementation, the transmit end device 1010 includes the application program unit 262 shown in FIG. 3, and the receive end device 1020 includes the application program unit 262 shown in FIG. 4.

In another possible implementation, the transmit end device 1010 is the transmit end device 800 shown in FIG. 8, and the receive end device 1020 is the receive end device 900 shown in FIG. 9.

It should be understood that, unless the context clearly supports an exception, a singular form "one" ("a", "an", and "the") used in this specification also intends to include a plural form. It should be further understood that "and/or" used in this specification includes any and all possible combinations of one or more correlated items that are listed.

The term "and/or" in the embodiments of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The sequence numbers of the embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. The invention is defined by the appended claims.

## Claims

1. A data sending method, wherein the method comprises:
precoding (501) a plurality of spatial flows to obtain a plurality of precoded data streams, wherein the plurality of spatial flows comprise at least two first preprocessed spatial flows, and the at least two first preprocessed spatial flows are obtained by preprocessing a first original spatial flow; and
transmitting (502) the plurality of precoded data streams,
wherein different spatial flows in the plurality of spatial flows are corresponding to different precoding vectors, each precoding vector is corresponding to one demodulation reference signal DMRS port, different precoding vectors are corresponding to different DMRS ports, and the method further comprises:
precoding demodulation reference signals of the plurality of spatial flows to obtain a plurality of precoded demodulation reference signals, wherein each of the plurality of spatial flows is corresponding to one demodulation reference signal; and
transmitting the plurality of precoded demodulation reference signals.

2. The method according to claim 1, wherein the at least two first preprocessed spatial flows are directed to a first receive end device.

3. The method according to claim 1, wherein the plurality of spatial flows further comprise at least one original spatial flow.

4. The method according to claim 3, wherein at least one of the at least one original spatial flow is directed to a second receive end device.

5. A data receiving method, comprising:
receiving (503) a plurality of precoded data streams, wherein the plurality of precoded data streams are obtained by precoding a plurality of spatial flows, the plurality of spatial flows comprise at least two first preprocessed spatial flows, and the at least two first preprocessed spatial flows are obtained by preprocessing a first original spatial flow;
restoring (504) the at least two first preprocessed spatial flows from the plurality of precoded data streams; and
restoring (505) the first original spatial flow based on the at least two first preprocessed spatial flows,
wherein different spatial flows in the plurality of spatial flows are corresponding to different precoding vectors, each precoding vector is corresponding to one demodulation reference signal DMRS port, different precoding vectors are corresponding to different DMRS ports, and the method further comprises:
receiving a plurality of precoded demodulation reference signals, wherein the plurality of precoded demodulation reference signals are obtained by precoding demodulation reference signals of the plurality of spatial flows, and each of the plurality of spatial flows is corresponding to one demodulation reference signal, wherein
the restoring the at least two first preprocessed spatial flows from the plurality of precoded data streams comprises:
restoring the at least two first preprocessed spatial flows from the plurality of precoded data streams based on precoded demodulation reference signals of the at least two first preprocessed spatial flows.

6. The method according to claim 5, wherein the at least two first preprocessed spatial flows are directed to a first receive end device.

7. The method according to claim 5 or 6, wherein the preprocessing is transmit diversity processing.

8. The method according to claim 7, wherein the transmit diversity processing is space-time transmit diversity processing, space-frequency transmit diversity processing, or space-time-frequency transmit diversity processing.

9. A transmit end device (800), comprising:
a first precoding module (810), configured to precode a plurality of spatial flows to obtain a plurality of precoded data streams, wherein the plurality of spatial flows comprise at least two first preprocessed spatial flows, and the at least two first preprocessed spatial flows are obtained by preprocessing a first original spatial flow; and
a first transmitting module (820), configured to transmit the plurality of precoded data streams,
wherein different spatial flows in the plurality of spatial flows are corresponding to different precoding vectors, each precoding vector is corresponding to one demodulation reference signal DMRS port, different precoding vectors are corresponding to different DMRS ports, and the transmit end device further comprises:
a second precoding module (830), configured to precode demodulation reference signals of the plurality of spatial flows to obtain a plurality of precoded demodulation reference signals, wherein each of the plurality of spatial flows is corresponding to one demodulation reference signal; and
a second transmitting module (840), configured to transmit the plurality of precoded demodulation reference signals.

10. The transmit end device according to claim 9, wherein the at least two first preprocessed spatial flows are directed to a first receive end device.

11. The transmit end device according to claim 9, wherein the plurality of spatial flows further comprise at least one original spatial flow.

12. The transmit end device according to claim 11, wherein at least one of the at least one original spatial flow is directed to a second receive end device.

13. A receive end device (900), comprising:
a first receiving module (910), configured to receive a plurality of precoded data streams, wherein the plurality of precoded data streams are obtained by precoding a plurality of spatial flows, the plurality of spatial flows comprise at least two first preprocessed spatial flows, and the at least two first preprocessed spatial flows are obtained by preprocessing a first original spatial flow;
a first restoration module (920), configured to restore the at least two first preprocessed spatial flows from the plurality of precoded data streams; and
a second restoration module (930), configured to restore the first original spatial flow based on the at least two first preprocessed spatial flows,
wherein different spatial flows in the plurality of spatial flows are corresponding to different precoding vectors, each precoding vector is corresponding to one demodulation reference signal DMRS port, different precoding vectors are corresponding to different DMRS ports, and the receive end device further comprises:
a second receiving module (940), configured to receive a plurality of precoded demodulation reference signals, wherein the plurality of precoded demodulation reference signals are obtained by precoding demodulation reference signals of the plurality of spatial flows, and each of the plurality of spatial flows is corresponding to one demodulation reference signal, wherein
the first restoration module (920) is configured to restore the at least two first preprocessed spatial flows from the plurality of precoded data streams based on precoded demodulation reference signals of the at least two first preprocessed spatial flows.

14. The receive end device according to claim 13, wherein the at least two first preprocessed spatial flows are directed to a first receive end device.

15. The receive end device according to claim 12 or 13, wherein the preprocessing is transmit diversity processing.

## Patentansprüche

1. Datensendeverfahren, wobei das Verfahren Folgendes umfasst:
Vorcodieren (501) einer Vielzahl von Raumströmen, um eine Vielzahl von vorcodierten Datenströmen zu erhalten, wobei die Vielzahl von Raumströmen mindestens zwei erste vorverarbeitete Raumströme umfasst und die mindestens zwei ersten vorverarbeiteten Raumströme durch Vorverarbeiten eines ersten ursprünglichen Raumstroms erhalten werden; und
Übertragen (502) der Vielzahl von vorverarbeiteten Datenströmen,
wobei verschiedene Raumströme in der Vielzahl von Raumströmen mit verschiedenen Vorcodierungsvektoren korrespondieren, wobei jeder Vorcodierungsvektor mit einem Demodulationsreferenzsignalport (DMRS-Port) korrespondiert,
wobei verschiedene Vorcodierungsvektoren mit verschiedenen DMRS-Ports korrespondieren, und das Verfahren ferner Folgendes umfasst:
Vorcodieren von Demodulationsreferenzsignalen von der Vielzahl von Raumströmen, um eine Vielzahl von vorcodierten Demodulationsreferenzsignalen zu erhalten, wobei jeder aus der Vielzahl von Raumströmen mit einem Demodulationsreferenzsignal korrespondiert; und
Übertragen der Vielzahl von vorcodierten Demodulationsreferenzsignalen.

2. Verfahren gemäß Anspruch 1, wobei die mindestens zwei ersten vorverarbeiteten Raumströme an eine erste Empfangsendvorrichtung geleitet werden.

3. Verfahren nach Anspruch 1, wobei die Vielzahl von Raumströmen ferner mindestens einen ursprünglichen Raumstrom umfasst.

4. Verfahren nach Anspruch 3, wobei mindestens einer von dem mindestens einen ursprünglichen Raumstrom zu einer zweiten Empfangsendvorrichtung geleitet wird.

5. Datenempfangsverfahren, Folgendes umfassend:
Empfangen (503) einer Vielzahl von vorcodierten Datenströmen, wobei die Vielzahl von vorcodierten Datenströmen durch Vorcodieren einer Vielzahl von Raumströmen erhalten wird, wobei die Vielzahl von Raumströmen mindestens zwei vorverarbeitete Raumströme umfasst und die mindestens zwei ersten vorverarbeiteten Raumströme durch Vorverarbeiten eines ersten ursprünglichen Raumstroms erhalten werden;
Wiederherstellen (504) der mindestens zwei ersten vorverarbeiteten Raumströme aus der Vielzahl von vorcodierten Datenströmen; und
Wiederherstellen (505) des ersten ursprünglichen Raumstroms, basierend auf den mindestens zwei ersten vorverarbeiteten Raumströmen,
wobei verschiedene Raumströme in der Vielzahl von Raumströmen mit verschiedenen Vorcodierungsvektoren korrespondieren, wobei jeder Vorcodierungsvektor mit einem Demodulationsreferenzsignalport (DMRS-Port) korrespondiert, wobei verschiedene Vorcodierungsvektoren mit verschiedenen DMRS-Ports korrespondieren, und das Verfahren ferner Folgendes umfasst:
Empfangen einer Vielzahl von vorcodierten Demodulationsreferenzsignalen, wobei die Vielzahl von vorcodierten Demodulationsreferenzsignalen durch Vorcodieren von Demodulationsreferenzsignalen aus der Vielzahl von Raumströmen erhalten wird und jeder aus der Vielzahl von Raumströmen mit einem Demodulationsreferenzsignal korrespondiert, wobei
das Wiederherstellen der mindestens zwei ersten vorverarbeiteten Raumströme aus der Vielzahl von vorcodierten Datenströmen Folgendes umfasst:
Wiederherstellen der mindestens zwei ersten vorverarbeiteten Raumströme aus der Vielzahl von vorcodierten Datenströmen, basierend auf den vorcodierten Demodulationsreferenzsignalen von den mindestens zwei ersten vorverarbeiteten Raumströmen.

6. Verfahren nach Anspruch 5, wobei die mindestens zwei ersten vorverarbeiteten Raumströme an eine erste Empfangsendvorrichtung geleitet werden.

7. Verfahren nach Anspruch 5 oder 6, wobei das Vorverarbeiten eine Übertragungsdiversitätsverarbeitung ist.

8. Verfahren nach Anspruch 7, wobei die Übertragungsdiversitätsverarbeitung eine Raum-Zeit-Übertragungsdiversitätsverarbeitung, eine Raum-Frequenz-Übertragungsdiversitätsverarbeitung oder eine Raum-Zeit-Frequenz-Übertragungsdiversitätsverarbeitung ist.

9. Übertragungsendvorrichtung (800), Folgendes umfassend:
ein erstes Vorcodierungsmodul (810), das dazu konfiguriert ist, eine Vielzahl von Raumströmen vorzucodieren, um eine Vielzahl von vorcodierten Datenströmen zu erhalten, wobei die Vielzahl von Raumströmen mindestens zwei erste vorverarbeitete Raumströme umfasst und die mindestens zwei ersten vorverarbeiteten Raumströme durch Vorverarbeiten eines ersten ursprünglichen Raumstroms erhalten werden; und
ein erstes Übertragungsmodul (820), das dazu konfiguriert ist, die Vielzahl von vorcodierten Datenströmen zu übertragen, wobei verschiedene Raumströme in der Vielzahl von Raumströmen mit verschiedenen Vorcodierungsvektoren korrespondieren, wobei jeder Vorcodierungsvektor mit einem Demodulationsreferenzsignalport (DMRS-Port) korrespondiert und
die Übertragungsendvorrichtung ferner Folgendes umfasst:
ein zweites Vorcodierungsmodul (830), das dazu konfiguriert ist, Demodulationsreferenzsignale aus der Vielzahl von Raumströmen vorzucodieren, um eine Vielzahl von vorcodierten Demodulationsreferenzsignalen zu erhalten, wobei jeder aus der Vielzahl von Raumströmen mit einem Demodulationsreferenzsignal korrespondiert; und
ein zweites Übertragungsmodul (840), das dazu konfiguriert ist, die Vielzahl von vorcodierten Demodulationsreferenzsignalen zu übertragen.

10. Übertragungsendvorrichtung nach Anspruch 9, wobei die mindestens zwei ersten vorverarbeiteten Raumströme an eine erste Empfangsendvorrichtung geleitet werden.

11. Übertragungsendvorrichtung nach Anspruch 9, wobei die Vielzahl von Raumströmen ferner mindestens einen ursprünglichen Raumstrom umfasst.

12. Übertragungsendvorrichtung nach Anspruch 11, wobei mindestens eines von dem mindestens einen ursprünglichen Raumstrom an eine zweite Empfangsendvorrichtung geleitet wird.

13. Empfangsendvorrichtung (900), Folgendes umfassend:
ein erstes Empfangsmodul (910), das dazu konfiguriert ist, eine Vielzahl von vorcodierten Datenströmen zu empfangen, wobei die Vielzahl von vorcodierten Datenströmen durch Vorcodieren einer Vielzahl von Raumströmen erhalten wird, wobei die Vielzahl von Raumströmen mindestens zwei erste vorverarbeitete Raumströme umfasst und die mindestens zwei ersten vorverarbeiteten Raumströme durch Vorverarbeiten eines ersten ursprünglichen Raumstroms erhalten wird;
ein erstes Wiederherstellungsmodul (920), das dazu konfiguriert ist, die mindestens zwei ersten vorverarbeiteten Raumströme aus der Vielzahl von vorcodierten Datenströmen wiederherzustellen; und
ein zweites Wiederherstellungsmodul (930), das dazu konfiguriert ist, den ersten ursprünglichen Raumstrom basierend auf den mindestens zwei ersten vorverarbeiteten Raumströmen wiederherzustellen,
wobei verschiedene Raumströme in der Vielzahl von Raumströmen mit verschiedenen Vorcodierungsvektoren korrespondieren, wobei jeder Vorcodierungsvektor mit einem Demodulationsreferenzsignalport (DMRS-Port) korrespondiert, wobei verschiedene Vorcodierungsvektoren mit verschiedenen DMRS-Ports korrespondieren und die Empfangsendvorrichtung ferner Folgendes umfasst:
ein zweites Empfangsmodul (940), das dazu konfiguriert ist, eine Vielzahl von vorcodierten Demodulationsreferenzsignalen zu empfangen, wobei die Vielzahl von vorcodierten Demodulationsreferenzsignalen durch Vorcodieren von Demodulationsreferenzsignalen aus der Vielzahl von Raumströmen erhalten wird und jeder aus der Vielzahl von Raumströmen mit einem Demodulationsreferenzsignal korrespondiert, wobei das erste Wiederherstellungsmodul (920) dazu konfiguriert ist, die mindestens zwei ersten vorverarbeiteten Raumströme aus der Vielzahl von vorcodierten Datenströmen basierend auf vorcodierten Demodulationsreferenzsignalen der mindestens zwei ersten vorverarbeiteten Raumströme wiederherzustellen.

14. Empfangsendvorrichtung nach Anspruch 13, wobei die mindestens zwei ersten vorverarbeiteten Raumströme an eine erste Empfangsendvorrichtung geleitet werden.

15. Empfangsendvorrichtung nach Anspruch 12 oder 13, wobei das Vorverarbeiten eine Übertragungsdiversitätsverarbeitung ist.

## Revendications

1. Procédé d'envoi de données, dans lequel le procédé comprend :
le précodage (501) d'une pluralité de flux spatiaux pour obtenir une pluralité de trains de données précodés, dans lequel la pluralité de flux spatiaux comprend au moins deux premiers flux spatiaux prétraités, et les au moins deux premiers flux spatiaux prétraités sont obtenus par prétraitement d'un premier flux spatial d'origine ; et
l'émission (502) de la pluralité de trains de données précodés, dans lequel des flux spatiaux différents dans la pluralité de flux spatiaux sont correspondants à des vecteurs de précodage différents, chaque vecteur de précodage est correspondant à un port de signal de référence de démodulation DMRS, des vecteurs de précodage différents sont correspondants à des ports DMRS différents, et le procédé comprend en outre :
le précodage de signaux de référence de démodulation de la pluralité de flux spatiaux pour obtenir une pluralité de signaux de référence de démodulation précodés, dans lequel chacun de la pluralité de flux spatiaux correspond à un signal de référence de démodulation ; et
l'émission de la pluralité de signaux de référence de démodulation précodés.

2. Procédé selon la revendication 1, dans lequel les au moins deux premiers flux spatiaux prétraités sont dirigés vers un premier dispositif d'extrémité de réception.

3. Procédé selon la revendication 1, dans lequel la pluralité de flux spatiaux comprend en outre au moins un flux spatial d'origine.

4. Procédé selon la revendication 3, dans lequel au moins l'un de l'au moins un flux spatial d'origine est dirigé vers un second dispositif d'extrémité de réception.

5. Procédé de réception de données, comprenant :
la réception (503) d'une pluralité de trains de données précodés, dans lequel la pluralité de trains de données précodés est obtenue par précodage d'une pluralité de flux spatiaux, la pluralité de flux spatiaux comprend au moins deux premiers flux spatiaux prétraités, et les au moins deux premiers flux spatiaux prétraités sont obtenus par prétraitement d'un premier flux spatial d'origine ;
la restauration (504) des au moins deux premiers flux spatiaux prétraités à partir de la pluralité de trains de données précodés ; et
la restauration (505) du premier flux spatial d'origine sur la base des au moins deux premiers flux spatiaux prétraités, dans lequel des flux spatiaux différents dans la pluralité de flux spatiaux sont correspondants à des vecteurs de précodage différents, chaque vecteur de précodage est correspondant à un port de signal de référence de démodulation DMRS, des vecteurs de précodage différents sont correspondants à des ports DMRS différents, et le procédé comprend en outre :
la réception d'une pluralité de signaux de référence de démodulation précodés, dans lequel la pluralité de signaux de référence de démodulation précodés est obtenue par précodage de signaux de référence de démodulation de la pluralité de flux spatiaux, et chacun de la pluralité de flux spatiaux est correspondant à un signal de référence de démodulation, dans lequel
la restauration des au moins deux premiers flux spatiaux prétraités à partir de la pluralité de trains de données précodés comprend :
la restauration des au moins deux premiers flux spatiaux prétraités à partir de la pluralité de trains de données précodés sur la base de signaux de référence de démodulation précodés des au moins deux premiers flux spatiaux prétraités.

6. Procédé selon la revendication 5, dans lequel les au moins deux premiers flux spatiaux prétraités sont dirigés vers un premier dispositif d'extrémité de réception.

7. Procédé selon la revendication 5 ou 6, dans lequel le prétraitement est un traitement de diversité d'émission.

8. Procédé selon la revendication 7, dans lequel le traitement de diversité d'émission est un traitement de diversité d'émission espace-temps, un traitement de diversité d'émission espace-fréquence, ou un traitement de diversité d'émission espace-temps-fréquence.

9. Dispositif d'extrémité d'émission (800), comprenant :
un premier module de précodage (810), conçu pour précoder une pluralité de flux spatiaux afin d'obtenir une pluralité de trains de données précodés, dans lequel la pluralité de flux spatiaux comprend au moins deux premiers flux spatiaux prétraités, et les au moins deux premiers flux spatiaux prétraités sont obtenus par prétraitement d'un premier flux spatial d'origine ; et
un premier module d'émission (820), conçu pour émettre la pluralité de trains de données précodés,
dans lequel des flux spatiaux différents dans la pluralité de flux spatiaux sont correspondants à des vecteurs de précodage différents, chaque vecteur de précodage est correspondant à un port de signal de référence de démodulation DMRS, des vecteurs de précodage différents sont correspondants à des ports DMRS différents, et le dispositif d'extrémité d'émission comprend en outre :
un second module de précodage (830), conçu pour précoder des signaux de référence de démodulation de la pluralité de flux spatiaux afin d'obtenir une pluralité de signaux de référence de démodulation précodés, dans lequel chacun de la pluralité de flux spatiaux est correspondant à un signal de référence de démodulation ; et
un second module d'émission (840), conçu pour émettre la pluralité de signaux de référence de démodulation précodés.

10. Dispositif d'extrémité d'émission selon la revendication 9, dans lequel les au moins deux premiers flux spatiaux prétraités sont dirigés vers un premier dispositif d'extrémité de réception.

11. Dispositif d'extrémité d'émission selon la revendication 9, dans lequel la pluralité de flux spatiaux comprend en outre au moins un flux spatial d'origine.

12. Dispositif d'extrémité d'émission selon la revendication 11, dans lequel l'au moins un de l'au moins un flux spatial d'origine est dirigé vers un second dispositif d'extrémité de réception.

13. Dispositif d'extrémité de réception (900), comprenant :
un premier module de réception (910), conçu pour recevoir une pluralité de trains de données précodés, dans lequel la pluralité de trains de données précodés est obtenue par précodage d'une pluralité de flux spatiaux, la pluralité de flux spatiaux comprend au moins deux premiers flux spatiaux prétraités, et les au moins deux premiers flux spatiaux prétraités sont obtenus par prétraitement d'un premier flux spatial d'origine ;
un premier module de restauration (920), conçu pour restaurer les au moins deux premiers flux spatiaux prétraités à partir de la pluralité de trains de données précodés ; et
un second module de restauration (930), conçu pour restaurer le premier flux spatial d'origine sur la base des au moins deux premiers flux spatiaux prétraités,
dans lequel des flux spatiaux différents dans la pluralité de flux spatiaux sont correspondants à des vecteurs de précodage différents, chaque vecteur de précodage est correspondant à un port de signal de référence de démodulation DMRS, des vecteurs de précodage différents sont correspondants à des ports DMRS différents, et le dispositif d'extrémité de réception comprend en outre :
un second module de réception (940), conçu pour recevoir une pluralité de signaux de référence de démodulation précodés, dans lequel la pluralité de signaux de référence de démodulation précodés est obtenue par précodage de signaux de référence de démodulation de la pluralité de flux spatiaux, et chacun de la pluralité de flux spatiaux est correspondant à un signal de référence de démodulation, dans lequel
le premier module de restauration (920) est conçu pour restaurer les au moins deux premiers flux spatiaux prétraités à partir de la pluralité de trains de données précodés sur la base de signaux de référence de démodulation précodés des au moins deux premiers flux spatiaux prétraités.

14. Dispositif d'extrémité de réception selon la revendication 13, dans lequel les au moins deux premiers flux spatiaux prétraités sont dirigés vers un premier dispositif d'extrémité de réception.

15. Dispositif d'extrémité de réception selon la revendication 12 ou 13, dans lequel le prétraitement est un traitement de diversité d'émission.
